Europäisches Patentamt

European Patent Office

Office européen des brevets

(19)

(11) **EP 1 331 474 A1**

(12) **EUROPÄISCHE PATENTANMELDUNG**

(43) Veröffentlichungstag:
 30.07.2003  Patentblatt 2003/31

(51) Int Cl.7: **G01N 7/16**

(21) Anmeldenummer: 03000255.4

(22) Anmeldetag: 07.01.2003

(84) Benannte Vertragsstaaten:
 **AT BE BG CH CY CZ DE DK EE ES FI FR GB GR HU IE IT LI LU MC NL PT SE SI SK TR**
 Benannte Erstreckungsstaaten:
 **AL LT LV MK RO**

(30) Priorität: **07.01.2002  DE 10200303**
 **07.02.2002  DE 10205156**

(71) Anmelder: **Hofmann, Holger**
 **45138 Essen (DE)**

(72) Erfinder: **Hofmann, Holger**
 **45138 Essen (DE)**

(74) Vertreter: **Zenz, Joachim Klaus, Dipl.-Ing. et al**
 **Huyssenallee 58-64**
 **45128 Essen (DE)**

(54) **Gerät und Verfahren zum Bestimmen des Wassergehalts von Feststoffen**

(57)   Die Erfindung betrifft ein Gerät und ein Verfahren zum Bestimmen des Wassergehalts von Feststoffen. Das Gerät zum Bestimmen des Wassergehalts von Feststoffen weist einen Behälter (1), eine Heizung (4) und einen Gassensor (13) auf, wobei der Gassensor (13) in dem Behälter (1) angeordnet ist, in den Behälter (1) eine Feststoffprobe (5) und ein mit Wasserdampf unter Bildung eines Meßgases reagierendes Reagenz (14) einbringbar sind und die Feststoffprobe (5) mittels der Heizung (4) erhitzbar ist. Erfindungsgemäß ist als Gassensor (13) ein Sensor für die Konzentration des Meßgases vorgesehen, das bei der Reaktion des Reagenzes (14) mit Wasserdampf entsteht. Auf diese Weise werden Meßfehler durch nicht auf die Entstehung von Wasserstoff zurückzuführenden Druckänderungen vermieden, so daß die Meßgenauigkeit des erfindungsgemäßen Geräts verbessert und sein Einsatzbereich vergrößert ist.

EP 1 331 474 A1

**Beschreibung**

Die Erfindung betrifft ein Gerät zum Bestimmen des Wassergehalts von Feststoffen, mit einem Behälter, einer Heizung und einem Gassensor, wobei der Gassensor in dem Behälter angeordnet ist, in den Behälter eine Feststoffprobe und ein mit Wasserdampf unter Bildung eines Gases reagierendes Reagenz einbringbar sind und die Feststoffprobe mittels der Heizung erhitzbar ist. Die Erfindung betrifft ferner ein Verfahren zum Bestimmen des Wassergehalts von Feststoffen, wobei eine Feststoffprobe erhitzt wird, der dadurch aus der Feststoffprobe austretende Wasserdampf unter Bildung eines Meßgases mit einem Reagenz reagiert und die Bildung des Meßgases erfaßt wird, um dadurch auf den Wassergehalt des Feststoffes zurückzuschließen.

Geräte bzw. Verfahren, wie zuvor beschrieben, sind aus dem Stand der Technik gut bekannt. Dazu wird verwiesen auf die FR 845 420, die DE 40 11 571 C2 sowie auf die DE 44 06 658 C2. Mit den dort beschriebenen Geräten und Verfahren läßt sich der Wassergehalt von Feststoffen bestimmen, wobei unter Feststoffen vorliegend alle in flächenhafter, granulatartiger oder pastöser Form vorliegende Stoffe verstanden werden sollen. Mit diesen Geräten bzw. bei diesen Verfahren wird eine Feststoffprobe bekannten Gewichts in einem geschlossenen, zumeist rohrförmigen Behälter erhitzt. Durch das Erhitzen tritt aus der Feststoffprobe das darin enthaltene Wasser in Form von Wasserdampf aus und reagiert mit einem in dem Behälter vorgesehenen Reagenz unter Freisetzung einer der aus der Feststoffprobe austretenden Wassermenge proportionalen Menge eines anderen Gases, vorliegend stets Meßgas genannt. Durch die Reaktion des aus der Feststoffprobe austretenden Wasserdampfes mit dem Reagenz zu dem Meßgas wird der Feststoffprobe und dem die Feststoffprobe in dem Behälter umgebenden Gas das enthaltene Wasser annähernd vollständig entzogen. Ist die Masse der Feststoffprobe bekannt, so ist die Druckerhöhung in dem Behälter durch das Meßgas ein Maß für den ursprünglichen relativen Wassergehalt der Feststoffprobe.

In älteren Systemen ist es üblich gewesen, als Reagenz Calciumcarbid zu verwenden, das mit Wasser nach folgender Formel Azethylen bildet:

$$Ca_2C + 2H_2O \rightarrow C_2H_2 + Ca(OH)_2.$$

Nachteilig bei diesem Verfahren ist die leichte Löslichkeit des Azethylens in einigen Feststoffen, insbesondere in Polymeren. Ein weiterer Nachteil dieses Verfahrens liegt in der Druckerhöhung durch das in dem Behälter eingeschlossene Gas, typischerweise Luft, während der Beheizung des Behälters. Die Druckerhöhung aufgrund der Beheizung des Behälters überlagert nämlich die Druckerhöhung, die von dem gebildeten Meßgas herrührt. Somit muß die Temperatur im gesamten Behälter genau erfaßt werden, da ansonsten insbesondere bei geringen Feuchten große Meßfehler verursacht werden.

Bei jüngeren Geräten (siehe DE 40 11 571 C2 und DE 44 06 658 C2) wird der Einfluß der Druckerhöhung durch die eingeschlossene Luft dadurch verringert, daß der Behälter vor Beginn der Messung bis auf einen geringen Druck von wenigen mbar evakuiert wird. Die nach dem Evakuieren im Behälter verbliebene Luft hat aufgrund ihres geringen Partialdrucks somit einen sehr viel geringeren Einfluß auf die Druckerhöhung durch das Beheizen. Nachteilig ist dabei jedoch, daß beim Evakuieren des Behälters die druckabhängige Siedetemperatur des Wassers unterschritten werden kann, so daß zumindest ein Teil des zu bestimmenden Wasseranteils der Feststoffprobe entfernt wird, bevor die Messung durch die Erfassung der Druckerhöhung beginnt. Insbesondere kommt es durch das Evakuieren zum Entfernen eines wesentlichen Teils der Oberflächenfeuchte auf der Feststoffprobe. Das zuvor beschriebene Verfahren ist daher besonders fehlerhaft bei Materialien mit großer Oberfläche, also Materialien, die z. B. in Pulverform oder als dünne Folien vorliegen. Nachteilig ist darüber hinaus der verhältnismäßig aufwendige apparative Aufbau aufgrund der anzuschließenden Vakuumpumpe und der Verwendung von zusätzlichen Ventilen. Schließlich können Dichtigkeitsprobleme auftreten, insbesondere wenn die Dichtflächen mit pulverförmigen Materialien in Kontakt kommen. Solche Undichtigkeiten führen zum Eintritt von Umgebungsluft in den Behälter, die dann zu einer Druckerhöhung führt, die in der Regel fälschlicherweise als Anstieg der Wasserstoffmenge interpretiert wird, da als einziges Maß für die Wasserstoffmenge der Druck Verwendung findet.

Im Gegensatz zu dem weiter oben angesprochenen älteren Verfahren wird bei dem zuvor beschriebenen Verfahren typischerweise Calciumhydrid als Reagenz eingesetzt. Calciumhydrid reagiert nach der nachfolgenden Formel mit Wasser zu Wasserstoff:

$$CaH_2 + 2H_2O \rightarrow Ca(OH)_2 + 2 H_2.$$

Das Calciumhydrid wird typischerweise in ein Sieb gefüllt, das in den Behälter eingehängt wird, so daß das Calciumhydrid über der Feststoffprobe angeordnet wird. Dabei muß das Calciumhydrid jedoch von der geheizten Feststoffprobe in einem hinreichenden Abstand angeordnet sein, da sich Calciumhydrid bei Temperaturen oberhalb von 90° C unter Freisetzung von Wasserstoff zersetzt. Der bei der Reaktion von Wasserdampf mit Calciumhydrid neben Wasserstoff entstehende gelöschte Kalk ($Ca(OH)_2$) ist sehr feinkörnig, so daß vom gelöschten Kalk herrührende Verunreinigungen leicht mit Dichtflächen in Kontakt kommen können, was zu Undichtigkeiten und damit zu den zuvor angesprochenen Meßfehlern führen kann. Darüber hinaus kann im allgemeinen nicht gewährleistet werden, daß die Temperaturen, denen das Calciumhydrid ausgesetzt ist, 90° C nicht überschreiten, so daß eine rechnerische Kompensation des durch die Zersetzung entstehenden zusätzlichen Druckes vorgenommen werden muß. Ein weiterer Nachteil liegt schließlich in der Notwendigkeit, daß das Calciumhydrid eine Mindestkorngröße aufweisen muß, da es ansonsten durch das Sieb in den Behälter fallen würde. Da Calciumhydrid relativ spröde ist, kann durch eine Bewegung des Reagenzes diese Körngröße unterschritten werden. Außerdem kann es auch zu einer Unterschreitung der kritischen Körngröße kommen, wenn sich das Reagenz durch die Reaktion mit Wasser zersetzt, so daß schon alleine hierdurch ein Teil des Calciumhydrids durch die Maschen des Siebs in den Behälter und unter Umständen in den beheizten Bereich fällt.

Die zuvor beschriebenen, aus dem Stand der Technik bekannten Verfahren sind somit hochempfindlich gegen Gasausscheidungen aus der Feststoffprobe, wenn diese Gasausscheidungen nicht in dem unbeheizten Bereich des Behälters kondensieren. Dies führt unter anderem dazu, daß keine Stoffe mit Lufteinschlüssen, wie Polymerschäume, gemessen werden können.

Es ist daher die Aufgabe der Erfindung, ein solches Gerät bzw. ein solches Verfahren zum Bestimmen des Wassergehalts von Feststoffen anzugeben, das bei einfachem Aufbau bzw. einfacher Durchführbarkeit eine geringe Fehleranfälligkeit, insbesondere hervorgerufen durch Fremdgasanteile, aufweist.

Das erfindungsgemäße Gerät zum Bestimmten des Wassergehalts von Feststoffen, mit dem die zuvor hergeleitete und aufgezeigte Aufgabe gelöst ist, ist ausgehend von dem eingangs beschriebenen Gerät dadurch gekennzeichnet, daß als Gassensor ein Sensor für die Konzentration des Meßgases vorgesehen ist, das bei der Reaktion des Reagenzes mit Wasserdampf entsteht.

Dies ist insofern vorteilhaft, als daß die Messung der Konzentration des Meßgases wesentlich spezifischer ist, als die Messung des Druckanstiegs, der auch auf andere Gase und Effekte als auf ein Ansteigen der Menge des Meßgases zurückführbar ist. Die Messung ist damit im wesentlichen auch nicht druckabhängig, so daß gewisse Temperaturschwankungen, kleinere Undichtigkeiten im Behälter und Gaseinschlüsse in dem Versuchsmaterial die Messung kaum bzw. zumindest weit weniger beeinflussen, als bei Geräten, die auf einer Druckmessung basieren. Da der Behälter außerdem nicht evakuiert werden muß, können auch Oberflächenfeuchten vollständig erfaßt werden.

Als Sensor für die Konzentrationen des Meßgases soll jeweils ein solcher Gassensor eingesetzt werden, der für das jeweilige Meßgas besonders geeignet ist. Bei der Verwendung eines mit Wasserdampf zu Wasserstoff reagierenden Reagenzes ist gemäß einer bevorzugten Weiterbildung der Erfindung vorgesehen, daß als Gassensor ein Sensor für die Konzentration von gasförmigem Wasserstoff vorgesehen ist, wobei sich als ein solcher Sensor für die Konzentration von gasförmigem Wasserstoff ein Wärmeleitfähigkeitssensor für Gase als besonders geeignet herausgestellt hat. Dies rührt daher, daß Wasserstoff im Verhältnis zu Luft eine deutlich höhere Wärmeleitfähigkeit aufweist. Über die Erhöhung der Wärmeleitfähigkeit kann also die Konzentration von gebildetem Wasserstoff verläßlich und auf einfache Weise nachvollzogen werden. Der Wärmeleitfähigkeitssensor liefert dann eine Spannung als Funktion der Wasserstoffkonzentration. Diese Spannung wird vorzugsweise einer Auswerteeinheit zugeführt, von der in Abhängigkeit von der Masse der Feststoffprobe und der Luftmenge in dem Behälter nach vollständiger Reaktion des austretenden Wassers mit dem Reagenz der ursprüngliche Wassergehalt der Feststoffprobe ermittelt und ausgegeben wird.

Weitere bevorzugt eingesetzte Sensoren zur Bestimmung der Wasserstoffkonzentration arbeiten nach dem Wärmetönungs-Verfahren, dem elektrochemischen Verfahren oder dem Chemosorptions-Verfahren. Diese Verfahren haben zum Teil zwar einen wesentlich kleineren Meßbereich, aber auch eine höhere Auflösung der Wasserstoff-Konzentration im Meßgas und sind deshalb geeignet, extrem niedrige Wassergehalte in Feststoffen zu bestimmen.

Die Konzentration des Wasserstoffs im Gasgemisch in dem Behälter ist neben der durch die Feststoffprobe eingebrachten Wassermenge auch von der Luftmenge im Behälter abhängig. Die Luftmenge ihrerseits ist wiederum abhängig von dem verfügbaren Volumen in dem Behälter, also dem Hohlraum des Behälters abzüglich dem Volumen der Feststoffprobe und dem Volumen des Reagenzes, sowie von der Temperatur der Luft in dem Hohlraum zum Zeitpunkt des Verschließens des Behälters. Bei einem relativ geringen Verhältnis des Volumens des Hohlraums zu dem Volumen der Feststoffprobe ist es vorteilhaft, nicht nur die Masse der Feststoffprobe zu berücksichtigen, sondern auch mit Hilfe der Materialdichte das Volumen der Feststoffprobe zu bestimmen, um somit die eingebrachte Luftmenge genau zu erfassen.

Weiterhin ist es vorteilhaft, die Temperatur der Luft zu bestimmen. Um Kondensation von Wasserdampf aus der Luft auf der Oberfläche des Behälters während des Austausches der Feststoffprobe oder des Reagenzes zu vermeiden, soll die Temperatur des Behälters wenigstens geringfügig über der Temperatur der Umgebung liegen, was durch die Heizung im allgemeinen jedoch immer gewährleistet ist. Um besonders genaue Meßergebnisse zu erreichen, können der Wassergehalt und/oder der Druck der Umgebungsluft zu Beginn der Messung über entsprechende Sensoren erfaßt und im Meßergebnis berücksichtigt werden.

Für die Funktion des erfindungsgemäßen Geräts zur Bestimmung des Wassergehalts von Feststoffen sind die Form und der Aufbau des Behälters grundsätzlich nicht wesentlich. Gemäß einer bevorzugten Weiterbildung der Erfindung ist jedoch vorgesehen, daß der Behälter ein Oberteil und ein Unterteil umfaßt und das Oberteil einen Reagenzraum zur Aufnahme des Reagenzes und das Unterteil einen Proberaum zur Aufnahme der Feststoffprobe aufweist.

Eine solche Konstruktion ist in vielerlei Hinsicht vorteilhaft, wie weiter unten noch im Detail ausgeführt.

Als Heizung können grundsätzlich verschiedene Einrichtungen vorgesehen sein, solange gewährleistet ist, daß mit der vorgesehenen Heizung die Feststoffprobe erhitzt werden kann. Gemäß einer bevorzugten Weiterbildung der Erfindung ist jedoch als Heizung eine unter dem Unterteil des Behälters angeordnete Heizplatte vorgesehen. Vorzugsweise steht die Heizplatte dabei in direktem Kontakt mit dem Unterteil des Behälters. Besonders bevorzugt ist außerdem, daß sich die Heizplatte über den gesamten Querschnitt des Unterteils erstreckt. Auf diese Weise ist das gesamte Unterteil des Behälters effektiv beheizbar, so daß eine optimale Erhitzung von einer z. B. als Granulat vorliegenden Feststoffprobe gewährleistet ist, die über den gesamten Querschnitt des Unterteils verteilt ist.

Grundsätzlich kann lediglich eine Steuerung der Heizleistung der Heizplattevorgesehen sein. Gemäß eine bevorzugten Weiterbildung der Erfindung ist jedoch vorgesehen, daß in oder an der Heizplatte ein Temperaturfühler angeordnet ist, der mit einem Temperaturregler zur Regelung der Temperatur der Heizplatte verbunden ist. Auf diese Weise kann eine gleichbleibende vorbestimmte Temperatur der Heizplatte gewährleistet werden.

Bei der Ausgestaltung des Behälters mit einem Oberteil, umfassend einen Reagenzraum, und einem Unterteil, umfassend einen Probenraum, ist es gemäß einer bevorzugten Weiterbildung der Erfindung vorgesehen, daß das Oberteil von dem Unterteil lösbar ist. Auf diese Weise kann ein Zugang zu dem Probenraum dadurch geschaffen werden, daß das Oberteil von dem Unterteil abgenommen wird. Damit ist ein einfaches Einfüllen bzw. Entfernen der Feststoffprobe möglich. Ein Vorteil dieser Anordnung ist auch eine schnelle Verflüchtigung des Meßgases aus vorangegangenen Versuchen. Ist das Oberteil des Behälters von dem Unterteil des Behälters lösbar, so ist vorzugsweise der Übergang zwischen dem Oberteil und dem Unterteil abgedichtet. Vorzugsweise dient zur Abdichtung ein O-Ring, wobei sich als Material für diesen O-Ring insbesondere Viton® bewährt hat.

Gemäß einer bevorzugten Weiterbildung der Erfindung kann ferner vorgesehen sein, daß das Oberteil des Behälters auf seiner Oberseite einen abnehmbaren Deckel aufweist. Auf diese Weise ist ein einfaches Einfüllen des Reagenzes bzw. ein einfaches Entfernen der durch die Reaktion mit Wasserdampf entstandenen Reaktionsprodukte möglich. Auch hier ist vorzugsweise vorgesehen, daß der Übergang zwischen dem abnehmbaren Deckel und dem Oberteil des Behälters abgedichtet ist, vorzugsweise ebenfalls mittels eines O-Rings aus Viton®.

Grundsätzlich wird eine effektive und schnelle Reaktion des Reagenzes mit dem Wasserdampf angestrebt. Dieser Effekt wird gemäß einer bevorzugten Ausführungsform der Erfindung unter anderem dadurch verbessert, daß die Reagenzschale vorzugsweise kreisrund ausgebildet ist und das Verhältnis des Durchmessers des Bodens der Reagenzschale zu deren vom Boden aus gemessener Höhe wenigstens mehr als 3, vorzugsweise mehr als 5 beträgt. Dabei ist zu beachten, daß das Reagenzvolumen durch die Reaktion zu Metallhydroxid zunimmt und gegebenenfalls den freien Querschnitt verringert, wodurch eine nicht gewünschte Behinderung der Konvektion erfolgen kann.

wenigstens mehr als fünf, vorzugsweise mehr als acht beträgt. Das Reagenz kann dann großflächig in der Reagenzschale verteilt werden, so daß es eine große Reaktionsfläche für den Wasserdampf bietet.

Das Unterteil des Behälters mit seinem Probenraum kann eine separate Schale zur Aufnahme der Feststoffprobe aufweisen. Gemäß einer bevorzugten Weiterbildung der Erfindung ist jedoch vorgesehen, daß das Unterteil des Behälters selbst als Festprobenschale zur Aufnahme der Feststoffprobe ausgebildet ist. Auf diese Weise wird nämlich eine sehr effiziente Erhitzung der Feststoffprobe gewährleistet. Dabei ist es besonders bevorzugt, daß die Feststoffprobenschale kreisrund ausgebildet ist und das Verhältnis des Durchmessers des Bodens der Feststoffprobenschale zu deren vom Boden aus gemessener Höhe wenigstens mehr als fünf, vorzugsweise mehr als acht beträgt.

Grundsätzlich ist es lediglich erforderlich, daß das Oberteil des Behälters mit dem Unterteil des Behälters derart verbunden ist, daß ein Austausch von Gas und Wasserdampf erfolgen kann. Gemäß einer bevorzugten Weiterbildung der Erfindung sind jedoch zwei Rohrstücke vorgesehen, die das Oberteil mit dem Unterteil, vorzugsweise ausschließlich, verbinden. Dabei ist es weiterhin besonders bevorzugt, daß die Rohrstücke einstückig mit dem Oberteil ausgebildet sind.

Wird gemäß einer bevorzugten Weiterbildung der Erfindung ferner eine Rohrstück derart ausgebildet, daß es in einen zentralen Bereich des Unterteils mündet, und das andere Rohrstück derart ausgebildet, daß es in einen äußeren Bereich des Unterteils mündet, wobei die beiden Rohrstücke vorzugsweise außerdem einander gegenüberliegend jeweils in einen äußeren Bereich des Oberteils münden, so ist dies insofern besonders vorteilhaft, als daß damit ein besonderer Konvektionsmodus erzielt wird: In der Feststoffprobenschale ergibt sich nämlich eine radiale Temperaturverteilung des Gases über den Querschnitt der Feststoffprobenschale, wobei die Temperatur zum Mittelpunkt der Feststoffprobenschale hin ansteigt. Somit steigt im wesentlichen Gas bzw. Wasserdampf über dasjenige Rohrstück von dem Probenraum in den Reagenzraum, das zentral in den Probenraum mündet. Ist nun gemäß einer bevorzugten Weiterbildung der Erfindung eine Kühlung für das Oberteil und damit für den Reagenzraum, vorgesehen, so wird das in den zentral in den Probenraum mündende Rohrstück aufsteigende Gas gekühlt und sinkt über das andere Rohrstück zurück in den beheizten Bereich. Dabei streicht das Wasserdampf mitführende Gas im Reagenzraum einmal annähernd vollständig über die Reagenzschale, die sich durch die zuvor beschriebene Anordnung der Rohrstücke zwischen diesen befindet. Die Kühlung des Oberteils erfolgt vorzugsweise durch einen Lüfter, jedoch ist auch ein sekundärer Kühlkreislauf mit einem flüssigen Kühlmedium oder eine Kühlung mittels elektrischer Peltierelemente möglich.

Wird, wie zuvor angesprochen, eine Kühlung des Oberteils, z. B. mittels eines Lüfters, verwendet, so ist gemäß einer bevorzugten Weiterbildung der Erfindung ferner eine thermische Trennung des Reagenzraums vom Proberaum vorgesehen. Dies wird vorzugsweise dadurch realisiert, daß zwischen dem Reagenzraum und dem Probenraum eine Isolierplatte zur thermischen Isolierung angeordnet ist.

Das erfindungsgemäße Verfahren, mit dem die weiter oben hergeleitete und aufgezeigte Aufgabe gelöst ist, ist ausgehend, von dem eingangs beschriebenen Verfahren dadurch gekennzeichnet, daß die Konzentration des Meßgases erfaßt wird.

Damit sind die weiter oben schon in Zusammenhang mit dem erfindungsgemäßen Meßgerät erläuterten Vorteile verbunden. Insbesondere ist gemäß einer bevorzugten Weiterbildung des erfindungsgemäßen Verfahrens also auch vorgesehen, daß ein mit Wasserdampf unter Bildung von gasförmigem Wasserstoff reagierendes Reagenz verwendet und die Konzentration des Wasserstoffs erfaßt wird. Die Erfassung der Konzentration des Wasserstoffs erfolgt dabei vorzugsweise mittels einer Wärmeleitfähigkeitsmessung. Wie ebenfalls schon erläutert, ist ein Evakuieren bei diesem Verfahren nicht erforderlich, so daß das Verfahren vorzugsweise unter Umgebungsdruck, also unter atmosphärischen Bedingungen, begonnen wird.

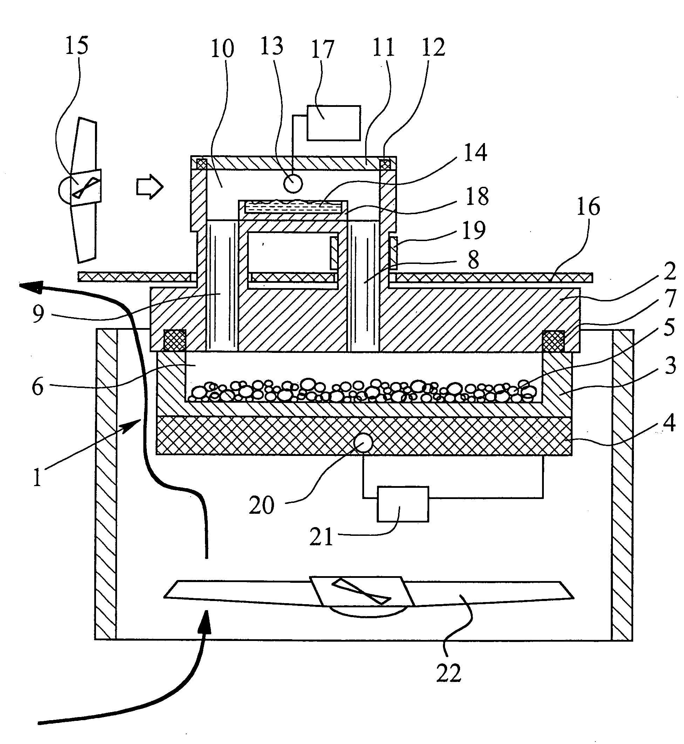

Im einzelnen gibt es nun eine Vielzahl von Möglichkeiten, daß erfindungsgemäße Gerät bzw. das erfindungsgemäße Verfahren auszugestalten und weiterzubilden. Dazu wird auf die den unabhängigen Patentansprüchen nachgeordnete Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt die einzige Figur schematisch im Schnitt ein Gerät zum Bestimmen des Wassergehalts von Feststoffen gemäß einem bevorzugten Ausführungsbeispiel der Erfindung.

Das aus der Figur ersichtliche Gerät zum Bestimmen des Wassergehalts von Feststoffen gemäß einem bevorzugten Ausführungsbeispiel der Erfindung weist einen Behälter 1 auf, der ein Oberteil 2 und eine Unterteil 3 umfaßt. Unter dem Unterteil 3 ist eine Heizung 4 in Form einer Heizplatte vorgesehen, die sich über den gesamten Querschnitt des Unterteils 3 erstreckt. Das Unterteil 3 ist als kreisrunde Feststoffprobenschale ausgebildet, umfaßt also einen Probenraum 6, in den die vorliegend als Granulat vorgesehene Feststoffprobe 5 eingebracht ist. Der Durchmesser der Feststoffprobenschale ist dabei wesentlich größer als ihre Höhe. Durch die große Bodenfläche des Unterteils 3, die auf ihrer Unterseite vollständig mit der als Heizplatte ausgebildeten Heizung 4 in Kontakt steht, ist ein effizientes Erhitzen der in dem Unterteil 3 vorgesehenen Feststoffprobe 5 gewährleistet. Das Oberteil 2 ist von dem Unterteil 3 abnehmbar, im Betrieb jedoch mit diesem fest verbunden, wobei der Übergang zwischen dem Oberteil 2 und dem Unterteil 3 mittels eines O-Rings 7 abgedichtet ist.

Das Oberteil 2 umfaßt einen unteren Bereich, der auf dem Unterteil 3 aufliegt und mit diesem mittels des O-Rings 7 abgedichtet ist, sowie zwei Rohrstücke 8, 9, die eine Verbindung des Probenraums 6 mit einem im oberen Bereich des Oberteils 2 vorgesehenen Reagenzraums 10 herstellen. Der Reagenzraum 10 ist nach oben hin mit einem Deckel 11 verschlossen, der ebenfalls mittels eines O-Rings 12 gegenüber dem Oberteil 2 abgedichtet ist. In dem Reagenzraum 10 ist eine aus dem Reagenzraum 10 entnehmbare Reagenzschale 18 mit dem Reagenz 14, vorliegend Calciumhydrid, vorgesehen. Calciumhydrid reagiert mit Wasserdampf unter Bildung von Wasserstoff nach folgender Formel:

$$CaH_2 + 2H_2O \rightarrow Ca(OH)_2 + 2\,H_2.$$

Neben der Verwendung von Calciumhydrid ist auch die Verwendung von Kaliumhydrid, Lithiumhydrid oder Magnesiumhydrid möglich, die nach folgenden Formeln mit Wasserdampf zu Wasserstoff reagieren:

$$KH + H_2O \rightarrow KOH + H_2$$

$$LiH + H_2O \rightarrow LiOH + H_2$$

$$MgH_2 + 2\,H_2O \rightarrow Mg(OH)_2 + 2H_2.$$

Da bei allen zuvor genannten Reaktionen das Wasser zu gleichen Teilen durch Wasserstoffmoleküle ersetzt wird, kann das Reagenz 14 bei dem Gerät gemäß dem vorliegend beschriebenen bevorzugten Ausführungsbeispiel der Erfindung beliebig ausgetauscht werden.

Im Reagenzraum 10 ist ein Gassensor 13 vorgesehen, der als Wärmeleitfähigkeitssensor ausgebildet ist und über die Wärmeleitfähigkeit die Konzentration des gebildeten Wasserstoffs mißt. Der Gassensor 13 liefert in Abhängigkeit von der gemessenen Wärmeleitfähigkeit eine Spannung an eine Auswerteeinheit 17 mit der letztlich der relative Wassergehalt der Feststoffprobe ermittelt und ausgegeben wird. Sind die Luftmenge in dem Behälter 1 und die Konzentration des Wasserstoffs bekannt, ergibt sich aus der Definition der Konzentration $c_{H2}$:

$$c_{H2} = n_{H2} / (n_{Luft} + n_{H2})$$

die Menge des Wasserstoffs, wobei $n_{H2}$ und $n_{Luft}$ die Menge an Wasserstoff bzw. Luft darstellen. Aus der Menge des Wasserstoffs ergibt sich schließlich die Menge des eingebrachten Wassers, so daß die Menge des eingebrachten Wassers, multipliziert mit der spezifischen Masse von Wasser und dividiert durch die Masse der Feststoffprobe, den ursprünglichen relativen Wassergehalt der Feststoffprobe ergibt.

Wie aus der Figur ersichtlich, ist gemäß dem bevorzugten Ausführungsbeispiel der Erfindung zur Kühlung des Reagenzraums 10 ein Lüfter 15 vorgesehen. Um die Kühlung des Reagenzraums 10 thermisch möglichst gut von dem darunter liegenden Bereich, in dem sich der Probenraum 6 mit der Feststoffprobe 5 befindet, zu trennen, ist dazwischen eine Isolierplatte 16 vorgesehen. Durch die Aufteilung in eine beheizte Zone, nämlich den Reagenzraum 10, und eine gekühlte Zone, nämlich den darunterliegenden Bereich, im wesentlichen gebildet durch den Probenraum 6, wird eine sichere Kühlung des Reagenzes 14 erzielt. Auf diese Weise wird gewährleistet, daß die Zersetzungstemperatur des Reagenzes 14 nicht erreicht wird. Dadurch, daß das Reagenz 14 in einer Reagenzschale 18 vorgesehen wird, können außerdem auch feinkörnige Reagenzien verwendet werden.

Der durch das Rohrstück 8 aufsteigende Wasserdampf reagiert also mit dem Reagenz 14, das in der entnehmbaren Reagenzschale 18 liegt. Die entnehmbare Reagenzschale 18 hat den Vorteil, daß das Reagenz leicht durch Öffnen des Deckels 11 ausgetauscht werden kann. In der Reagenzschale 18 ist eine dünne Schicht des Reagenzes 14 ausgebreitet, so daß die mit dem Gas in Berührung kommende Fläche des Reagenzes 14 möglichst groß ist. Um eine möglichst schnelle und effektive Reaktion des Wasserdampfes mit dem Reagenz 14 zu erreichen, ist die Höhe des Reagenzraums 10 im Vergleich zum Durchmesser der runden Reagenzschale 18 verhältnismäßig niedrig gehalten. Ferner ist der Reagenzraum 10 deutlich kleiner als der Probenraum 6.

Da der Reagenzraum 10 durch den Lüfter 15 gekühlt wird, wird das im Rohrstück 8 aufsteigende Gas ebenfalls gekühlt und sinkt über das Rohrstück 9 zurück in den beheizten Bereich des Probenraums 6. Diese Konvektion wird konstruktiv dadurch unterstützt, daß das Rohrstück 8 über dem Zentrum des Unterteils 3 und das Rohrstück 9 über einem Randbereich des Unterteils 2 angeordnet ist. Versuche haben nämlich gezeigt, daß in dem Probenraum 6 eine radiale Temperaturverteilung des Gases über den Querschnitt vorliegt und die Temperatur zum Mittelpunkt des Probenraums 6 hin steigt. Die Isolierplatte 16, die Ausschnitte für die Rohrstücke 8, 9 aufweist, verhindert die Abkühlung des Deckels 11 durch den vom Lüfter 15 erzeugten Luftstrom sowie die Erwärmung des Reagenzraums 10. Weiterhin wird die schon angesprochene Zirkulation des Gases durch eine solche Positionierung des Lüfters 15 unterstützt, bei der das Rohrstück 9 von dem Kühlluftstrom stärker gekühlt wird als das Rohrstück 8, sowie durch eine zusätzliche Isolierung 19 des Rohrstücks 8.

Schließlich ist in der Heizung 4 ein Temperaturfühler 20 vorgesehen, der mit einem Temperaturregler 21 verbunden ist. Über den Temperaturregler 21 ist eine Regelung der Temperatur und damit ein Konstanthaltung der Temperatur der Heizung 4 möglich. Als Temperaturfühler 20 wird vorzugsweise ein Widerstandsthermometer verwendet.

Folgen mehrere Messungen nacheinander, sollte die Feststoffprobenschale auf 50° C abgekühlt werden, damit nicht ein Teil der Feststoffprobenfeuchte bei dem Einfüllvorgang verdampft. Dies geschieht am zweckmäßigsten durch einen Ventilator 22, der etwa 4 cm unter der Heizplatte angeordnet ist. Um einen möglichst guten Kühleffekt zu erzielen, wird die von dem Ventilator 22 erzeugte Luftströmung durch eine um das Gerät herum verlaufende Ummantelung 23 hindurch an den Seitenwänden der Heizplatte sowie an den Seiten der Feststoffprobenschale und dem darüberliegenden Oberteil 2 vorbeigelenkt.

Abschließend sei darauf hingewiesen, daß die durch den relativ großen Durchmesser des Unterteils 3 bedingte Größe des O-Rings 7 zur Abdichtung zwischen dem Unterteil 3 und dem Oberteil 2 zwar größer ist als bei den aus dem Stand der Technik bekannten Geräten. Jedoch muß vorliegend kein Vakuum erzeugt werden, so daß entsprechende Probleme bei Undichtigkeiten vermieden werden. Weiterhin gilt, daß durch mögliche Undichtigkeiten bei einem homogenen Luft-Wasserstoffgemisch zunächst keine Änderung der Konzentration durch einen Druckabfall bewirkt wird. Es wird nämlich nur durch zusätzlich gebildeten Wasserstoff ein Meßfehler in Abhängigkeit der Menge der im Behälter verbliebenen Luft erzeugt. Die durch den Druckverlust aufgrund einer Undichtigkeit verursachte Konzentrationsänderung ist im besten Fall Null, nämlich dann, wenn kein weiterer Wasserdampf aus der Probe austritt und mit dem Reagenz Wasserstoff bildet. Dies ist ein wesentlicher Vorteil der Erfindung gegenüber dem Stand der Technik.

**Patentansprüche**

1. Gerät zum Bestimmen des Wassergehalts von Feststoffen, mit einem Behälter (1), einer Heizung (4) und und einem Gassensor (13), wobei der Gassenor (13) in dem Behälter (1) angeordnet ist, in den Behälter (1) eine Feststoffprobe (5) und ein mit Wasserdampf unter Bildung eines Meßgases reagierendes Reagenz (14) einbringbar sind und die Feststoffprobe (5) mittels der Heizung (4) erhitzbar ist, **dadurch gekennzeichnet, daß** als Gassensor (13) ein Sensor für die Konzentration des Meßgases vorgesehen ist, das bei der Reaktion des Reagenzes (14) mit Wasserdampf entsteht.

2. Gerät nach Anspruch 1, **dadurch gekennzeichnet, daß** als Gassensor (13) ein Sensor für die Konzentration von gasförmigem Wasserstoff vorgesehen ist.

3. Gerät nach Anspruch 1 oder 2, **dadurch gekennzeichnet, daß** der Behälter (1) ein Oberteil (2) und ein Unterteil (3) umfaßt und das Oberteil (2) einen Reagenzraum (10) zur Aufnahme des Reagenzes (14) und das Unterteil (3) einen Probenraum (6) zur Aufnahme der Feststoffprobe (5) aufweist.

4. Gerät nach einem der Ansprüche 1 bis 3, **dadurch gekennzeichnet, daß** das Unterteil (3) als Feststoffprobenschale zur Aufnahme der Feststoffprobe (5) ausgebildet ist.

5. Gerät nach eiem der Ansprüche 1 bis 4, **dadurch gekennzeichnet, daß** eine Kühlung für das Oberteil (2) vorgesehen ist, vorzugsweise mittels eines Lüfters (15).

6. Gerät nach Anspruch 5, **dadurch gekennzeichnet, daß** der Reagenzraum (10) vom Probenraum (6) thermisch getrennt ist.

7. Verfahren zum Bestimmen des Wassergehalts von Feststoffen, wobei eine Feststoffprobe (5) erhitzt wird, der dadurch aus der Feststoffprobe austretende Wasserdampf unter Bildung des Meßgases mit einem Reagenz (14) reagiert und die Bildung des Meßgases erfaßt wird, um dadurch auf den Wassergehalt des Feststoffs zurückzuschließen, **dadurch gekennzeichnet, daß** die Konzentration des Meßgases erfaßt wird.

8. Verfahren nach Anspruch 7, **dadurch gekennzeichnet, daß** ein mit Wasserdampf unter Bildung von gasförmigem Wasserstoff reagierendes Reagenz (14) verwendet wird und die Konzentration des Wasserstoffs erfaßt wird.

9. Verfahren nach Anspruch 8, **dadurch gekennzeichnet, daß** die Konzentration des Wasserstoffs mittels einer Wärmeleitfähigkeitsmessung erfaßt wird.

10. Verfahren nach einem der Ansprüche 7 bis 9, **dadurch gekennzeichnet, daß** das Verfahren unter Umgebungsdruck begonnen wird.

**Europäisches Patentamt**

# EUROPÄISCHER RECHERCHENBERICHT

Nummer der Anmeldung

EP 03 00 0255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 531 780 A (COMMISSARIAT ENERGIE ATOMIQUE) 17. Februar 1984 (1984-02-17) | 1,2,7-9 | G01N7/16 |
| Y | * Seite 2, Zeile 8 - Seite 6, Zeile 11; Abbildung 1 * | 3-5 | |
| | --- | | |
| X,D | DE 44 06 658 A (HEINZ WERNER) 8. Dezember 1994 (1994-12-08) | 1,2 | |
| Y | * Zusammenfassung * | 3-5 | |
| A | | 2,6-10 | |
| | ----- | | |
| | | | **RECHERCHIERTE SACHGEBIETE (Int.Cl.7)** |
| | | | G01N |

Der vorliegende Recherchenbericht wurde für alle Patentansprüche erstellt

| Recherchenort | Abschlußdatum der Recherche | Prüfer |
|---|---|---|
| MÜNCHEN | 22. Mai 2003 | Thomte, M |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　EP 03 00 0255

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| FR 2531780 | A | 17-02-1984 | FR | 2531780 A1 | 17-02-1984 |
| DE 4406658 | A | 08-12-1994 | DE | 9307860 U1 | 22-07-1993 |
|  |  |  | DE | 4406658 A1 | 08-12-1994 |

EPO FORM P0461

Für nähere Einzelheiten zu diesem Anhang : siehe Amtsblatt des Europäischen Patentamts, Nr.12/82